# EUROPEAN PATENT APPLICATION

(11) **EP 3 819 618 A1**
(43) Date of publication of application: **12.05.2021**
(21) Application number: 19831345.4
(22) Date of filing: 26.04.2019
(51) Int. Cl.: G01L 3/10, G01L 3/14

(54) **TORQUE SENSOR SUPPORT DEVICE**

(30) Priority: 02.07.2018 JP 2018126136
(71) Applicant: Nidec Copal Electronics Corporation, Shinjuku-ku Tokyo 160-0023 (JP)
(72) Inventor: ENDO, Takayuki, Sano-shi, Tochigi 327-0104 (JP); SUZUKI, Takashi, Sano-shi, Tochigi 327-0104 (JP)
(74) Representative: Zech, Stefan Markus
(86) International application number: PCT/JP2019/018142
(87) International publication number: WO 2020/008717

(57) **Abstract**

A torque sensor supporting device capable of preventing bending moment other than torque from occurring to a torque sensor and improving the detection accuracy of the torque sensor is provided. A first supporting body 11 is provided to a base 31 serving as a first mounting section. A second supporting body 12 is joined to a second structure 42 of a torque sensor 40 including a first structure 41 provided to the base 31, the second structure 42 coupled to a first arm 32 serving as a second mounting section, third structures 43 provided between the first structure and the second structure, and at least two sensor portions 44 and 45 provided between the first structure and the second structure. Third supporting bodies 13 are provided between the first supporting body and the second supporting body, are movable in a torque direction of the torque sensor, and the movement of the third supporting bodies 13 in a direction other than a torque is suppressed.

## Description

### Technical Field

Embodiments described herein relate generally to a torque sensor to be applied to, for example, a robot arm or the like, and relate further to a supporting device configured to support the torque sensor.

### Background Art

A torque sensor includes a first structure to which torque is applied, a second structure from which torque is output, and a plurality of strain sections serving as beams connecting the first structure and the second structure, and a plurality of strain gauges serving as sensor elements are arranged on the strain sections. A bridge circuit is constituted by these strain gauges (cf., for example, Patent Literature 1, 2, and 3).

In a torque amount converter which measures a torque generated in an output unit of an engine, etc. of an automobile, a technique for reducing an influence of a bending stress other than torque has been developed (cf., for example, Patent Literature 4).

### Citation List

### Patent Literatures

Patent Literature 1: JP 2013-096735 A
Patent Literature 2: JP 2015-049209 A
Patent Literature 3: JP 2017-172983 A
Patent Literature 4: JP 2010-169586 A

### Summary of Invention

When a disk-shaped torque sensor is used by fixing the first structure thereof to, for example, a base of a robot arm (hereinafter simply referred to as an arm) and fixing the second structure thereof to, for example, a drive unit of the arm, a bending moment accompanying the transfer weight of the arm, distance to the load (distance from the center of the torque sensor to the object to be carried), and acting acceleration (moment of inertia of the arm and load) is applied to the torque sensor.

In general, when, for example, two strain sections (hereinafter also referred to as strain bodies) are arranged in the diametrical direction of a disk-shaped torque sensor and there are loads which present on both sides of a first axis line passing through the two strain sections and which are equal and opposite in direction to each other, bending moment is applied to the torque sensor. However, only symmetrical strains are created in the two strain bodies, and hence the sensor output associated with the bending moment to be applied to the torque sensor becomes theoretical zero. That is, the torque sensor is not subjected to interferences from other axes (hereinafter referred to as other-axes interferences) other than the torque. When similar loads are present on a second axis line perpendicular to the first axis line or even when the similar loads are present at positions on a line diagonally intersecting the first axis line and second axis line, the torque sensor is theoretically not subjected to the other-axes interferences.

Further, in the case where the force application point (or working point) is present on one side of the diametrical direction of the torque sensor with respect to the center of the torque sensor, when the load is present at a position of 0° or 180° on the first axis line and when the load is present at a position of 90° or 270° on the second axis line, although bending moment is applied to the torque sensor, the bending moment is cancelled by the two strain bodies. For this reason, the torque sensor is not subjected to other-axes interferences and the sensor output becomes zero.

When the torque sensor is to be utilized for the robot arm, one end of the arm is fixed to the torque sensor side, and the other end thereof is present at a position separate from the torque sensor. That is, when the fulcrum is on the torque sensor side, the force application point (or working point) acting as the load is present at a position separate from the fulcrum. Moreover, the positions of the loads are not always present on the two axis lines passing through the center of the disk-shaped torque sensor and perpendicular to each other. Accordingly, the torque sensor is subjected to the other-axes interferences attributable to the bending moment. In this case, particularly with respect to a load at a position deviated from the first axis line and second axis line by 45°, large other-axes interferences occur. More specifically, a peak of the sensor output occurs at each of 45°, 135°, 225°, and 315° of the rotational angle of the arm. When the sensor output is assumed to be a sinusoidal wave, two peaks occur during one period, and hence the peaks are called f2 components.

As described above, due to the fact that the bending moment other than the torque occurs in the torque sensor, and by the other-axes interferences, the f2 components occur. For this reason, the detection accuracy of the torque sensor has been lowered.

Embodiments described herein aim to provide a torque sensor supporting device capable of preventing bending moment other than torque from occurring to a torque sensor and improving the detection accuracy of the torque sensor.

A torque sensor supporting device of this embodiment comprises a first supporting body provided to a first mounting section, a second supporting body to be coupled to a second structure of a torque sensor including a first structure provided to the first mounting section, the second structure to be coupled to a second mounting section, third structures provided between the first structure and the second structure, and at least two sensor portions provided between the first structure and the second structure, and third supporting bodies which are provided between the first supporting body and the second supporting body, are deformable in a torque direction of the torque sensor, and deformation of which in a direction other than a torque is suppressed.

### Brief Description of Drawings

FIG. 1 is an exploded perspective view showing an example of a torque sensor supporting device according to a first embodiment.
FIG. 2 is a view showing the state where the torque sensor supporting device shown in FIG. 1 is assembled and is a cross-sectional view along line II-II of FIG. 1.
FIG. 3 is a perspective view showing an example of a robot arm to which this embodiment is to be applied.
FIG. 4 is a plan view showing an example of a torque sensor to which this embodiment is to be applied.
FIG. 5 is a view showing a relationship between a rotational angle of the robot arm and sensor output and is a view showing a comparison between this embodiment and comparison example.
FIG. 6 is a view shown for explaining the bending moment occurring to the torque sensor.
FIG. 7 is a perspective view showing an example of a torque sensor supporting device according to a second embodiment.
FIG. 8 is a view showing the state where the torque sensor supporting device shown in FIG. 7 is assembled and is a cross-sectional view along line VIII-VIII of FIG. 7.

Mode for Carrying Out the Invention Embodiments of the present invention will be described below with reference to the accompanying drawings. Elements like or similar to those disclosed in the above embodiments are denoted by similar reference numbers.

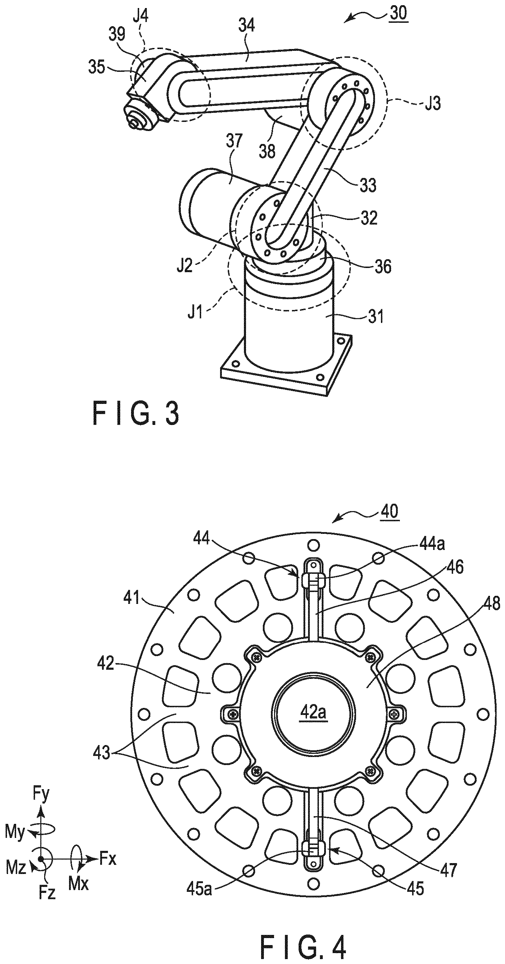

First, a robot arm 30 and torque sensor 40 to which the embodiment is applied will be described below with reference to FIG. 3 and FIG. 4.

FIG. 3 shows an example of an articulated robot, i.e., the robot arm 30. The robot arm 30 comprises, for example, a base 31, a first arm 32, a second arm 33, a third arm 34, a fourth arm 35, a first drive unit 36 serving as a drive source, a second drive unit 37, a third drive unit 38, and a fourth drive unit 39. However, the configuration of the robot arm 30 is not limited to this and is modifiable.

The first arm 32 is provided to be rotatable relative to the base 31 by the first drive unit 36 provided to a first joint J1. The second arm 33 is provided to be rotatable relative to the first arm 32 by the second drive unit 37 provided to a second joint J2. The third arm 34 is provided to be rotatable relative to the second arm 33 by the third drive unit 38 provided to a third joint J3. The fourth arm 35 is provided to be rotatable relative to the third arm 34 by the fourth drive unit 39 provided to a fourth joint J4. A hand and various tools (not shown) are mounted on the fourth arm 35.

Each of the first drive unit 36 to the fourth drive unit 39 comprises, for example, a motor, a speed reducer, and a torque sensor, which will be described later.

FIG. 4 shows an example of the disk-shaped torque sensor 40 to be applied to this embodiment. The torque sensor 40 comprises a first structure 41, second structure 42, plurality of third structures 43, first strain sensor 44 and second strain sensor 45 both constituting a sensor portion, and the like.

Both the first structure 41 and second structure 42 are formed annular, and the diameter of the second structure 42 is smaller than the diameter of the first structure 41. The second structure 42 is arranged concentric with the first structure 41, and first structure 41 and second structure 42 are coupled to each other by the third structures 43 serving as a plurality of radially arranged beams. The plurality of third structures 43 transmits torque between the first structure 41 and second structure 42. The second structure 42 includes a hollow section 42a and, for example, wiring (not shown) is passed through the hollow section 42a.

Although the first structure 41, second structure 42, and plurality of third structures 43 are constituted of a metal, for example, stainless steel, materials other than the metal can also be used if mechanical strength sufficient to withstand the applied torque can be obtained. The first structure 41, second structure 42, and plurality of third structures 43 all have, for example, the same thickness. The mechanical strength of the torque sensor 40 is set according to the thickness, width, and length of the third structure 43.

Between the first structure 41 and second structure 42, the first strain sensor 44 and second strain sensor 45 are provided. More specifically, one ends of a strain body 44a constituting the first strain sensor 44 and strain body 45a constituting the second strain sensor 45 are joined to the first structure 41, and the other ends of the strain bodies 44a and 45a are joined to the second structure 42. A thickness of each of the strain bodies 44a and 45a is less than the thickness of each of the first structure 41, second structure 42, and plurality of third structures 43.

On each of the surfaces of the strain bodies 44a and 45a, a plurality of strain gauges (not shown) serving as sensor elements is provided. A first bridge circuit is constituted of the sensor elements provided on the strain body 44a, and second bridge circuit is constituted of the sensor elements provided on the strain body 45a. That is, the torque sensor 40 is provided with two bridge circuits.

Further, the first strain sensor 44 and second strain sensor 45 are arranged at positions symmetrical with respect to the center (action center of torque) of each of the first structure 41 and second structure 42. In other words, the first strain sensor 44 and second strain sensor 45 are arranged on the diameter of each of the annular first structure 41 and second structure 42.

The first strain sensor 44 (strain body 44a) is connected to a flexible wiring board 46 and second strain sensor 45 (strain body 45a) is connected to a flexible wiring board 47. The flexible wiring boards 46 and 47 are connected to a printed-wiring board (not shown) covered with a cover 48. On the printed-wiring board, operational amplifiers and the like configured to amplify output voltages of the two bridge circuits are arranged. The circuit configuration is not the nature of this embodiment, and hence a description thereof is omitted.

In this embodiment, the torque sensor 40 is deformed with respect to torque (Mz), and its deformation with respect to a bending moment other than torque (Mx, My) is suppressed by a supporting device to be described later.

### (First Embodiment)

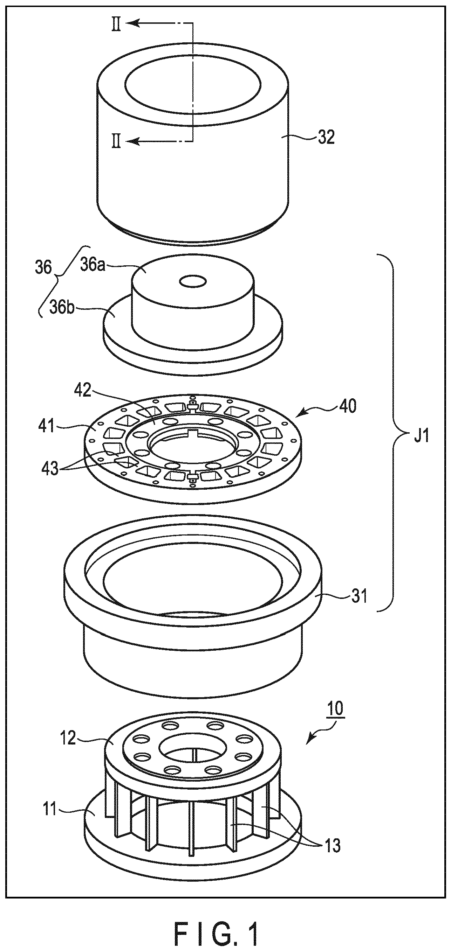

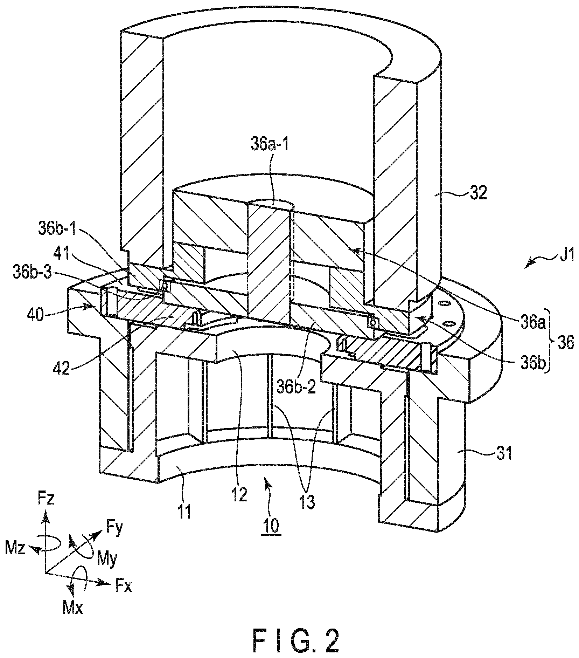

FIG. 1 and FIG. 2 show a first embodiment.

As shown in FIG. 1 and FIG. 2, in, for example, the first joint J1, the first drive unit 36, torque sensor 40, and supporting device 10 configured to support thereon the torque sensor 40 are provided. The first drive unit 36 is provided inside the first arm 32 and on a first surface (top surface) of the torque sensor 40, and supporting device 10 is provided inside the base 31 and on a second surface (rear surface) of the torque sensor 40.

As shown in FIG. 2, the first drive unit 36 includes, for example, a motor 36a and speed reducer 36b. The speed reducer 36b is provided with, for example, a case 36b-1, output shaft 36b-2, bearing 36b-3, plurality of gears and the like not shown. The output shaft 36b-2 is coupled to a shaft 36a-1 of the motor 36a through a plurality of gears not shown, and is provided rotatable relatively to the case 36b-1 by the bearing 36b-3.

The first structure 41 of the torque sensor 40 is fixed to an upper part of the base 31 serving as a first mounting section of the robot arm 30 by means of screws not shown, and second structure 42 is fixed to the output shaft 36b-2 of the speed reducer 36b by means of a plurality of screws not shown. The case 36b-1 of the speed reducer 36b is fixed to the first arm 32 serving as a second mounting section.

The supporting device 10 comprises a first supporting body 11, second supporting body 12, and plurality of third supporting bodies 13 provided between the first supporting body 11 and second supporting body 12. The first supporting body 11 and second supporting body 12 are annular, and first supporting body 11 and second supporting body 12 are arranged in parallel with each other and separate from each other with a predetermined space held between them in the thickness direction (z-axis direction). The outer diameter of the second supporting body 12 is less than the outer diameter of the first supporting body 11 and is made approximately equal to the inner diameter of the base 31.

Each of the third supporting bodies 13 is arranged in parallel with the z-axis, one end thereof in the z-axis direction is provided on the first supporting body 11, and the other end thereof is provided on the second supporting body 12. Each of the third supporting bodies 13 is arranged in parallel with the diametrical direction of each of the first supporting body 11 and second supporting body 12. The dimension (width) of each of the supporting bodies 13 in the z-axis direction perpendicular to the diametrical direction is made greater than the dimension (thickness) thereof in the circumferential direction.

The third supporting bodies 13 are arranged at equal intervals in the circumferential direction of each of the first supporting body 11 and second supporting body 12.

The number of the third supporting bodies 13 is greater than or equal to, for example, four.

The supporting device 10 may also be constituted of a material higher than the torque sensor 40 in Young's modulus (modulus of longitudinal elasticity), e.g., ceramic or the like. Alternatively, the supporting device 10 may also be constituted of an anisotropic material the mechanical property of which differs depending on the direction.

The first supporting body 11 is fixed to the bottom section of the base 31 of the robot arm 30, and second supporting body 12 and plurality of third supporting bodies 13 are arranged inside the base 31. The second structure 42 of the torque sensor 40 is fixed to the second supporting body 12 by means of a plurality of screws not shown.

As will be described later, when torque (Mz) is applied to the first supporting body 11 through the second supporting body 12, the torque (Mz) acts on the third supporting bodies 13 in their thickness directions. The thickness of the third supporting body 13 is less than the length of the third supporting body 13 in the width direction thereof, and hence the third supporting bodies 13 are deformed (moved) in the thickness directions by the torque (Mz). Accordingly, the second supporting body 12 rotates relatively to the first supporting body 11.

On the other hand, when bending moment other than torque (Mx, My) is applied to the first supporting body 11 through the second supporting body 12, this bending moment acts on the third supporting bodies 13 in their width directions. Accordingly, the third supporting bodies 13 are hardly deformed (moved) by this force, and second supporting body 12 is not moved relatively to the first supporting body 11.

In the configuration described above, when the speed reducer 36b is driven by the motor 36a, torque (Mz) is applied to the torque sensor 40. The second structure 42 of the torque sensor 40 is displaced in the torque (Mz) direction relative to the first structure 41. Accompanying the displacement of the second structure 42, the second supporting body 12 of the supporting device 10 is displaced in the torque (Mz) direction. That is, the plurality of third structures 43 is deformed, whereby the second supporting body 12 is displaced together with the second structure 42.

In the torque sensor 40, the second structure 42 is displaced relatively to the first structure 41, whereby electric signals are output from the first strain sensor 44 and second strain sensor 45, and the torque can be detected.

On the other hand, when the first to fourth arms 32 to 35 are operated, and when the bending moment other than the torque (Mx, My) accompanying the transfer weight, distance to the load, and acting acceleration is applied to the torque sensor 40, the third supporting bodies 13 of the supporting device 10 are hardly deformed in direction other than the torque (Mx, My). For this reason, the displacement of the second supporting body 12 relative to the first supporting body 11 is suppressed, and displacement of the second structure 42 relative to the first structure 41 of the torque sensor 40 is suppressed. Accordingly, in the torque sensor 40, the output of a detection signal for the bending moment other than the torque (Mx, My) is suppressed.

### (Advantages of First Embodiment)

According to the first embodiment, the supporting device 10 is provided with the first supporting body 11 fixed to the base 31 of the robot arm 30, second supporting body 12 fixed to the second structure 42 of the torque sensor 40, and plurality of third supporting bodies 13 provided between the first supporting body 11 and second supporting body 12, and when torque (Mz) is applied to the torque sensor 40, the plurality of third structures 43 are deformed, whereby the second supporting body 12 and second structure 42 of the torque sensor 40 are displaced. Accordingly, it is possible to detect the torque by the torque sensor 40. Further, when the bending moment other than the torque (Mx, My) is applied to the torque sensor 40, displacement of the second supporting body 12 relative to the first supporting body 11 is suppressed by the third supporting bodies 13 of the supporting device 10, and displacement of the second structure 42 relative to the first structure 41 of the torque sensor 40 is suppressed. For this reason, it is possible for the torque sensor 40 to suppress the output of a detection signal for the bending moment other than the torque (Mx, My). Accordingly, it is possible for the torque sensor 40 to suppress other-axes interferences and improve the detection accuracy of torque.

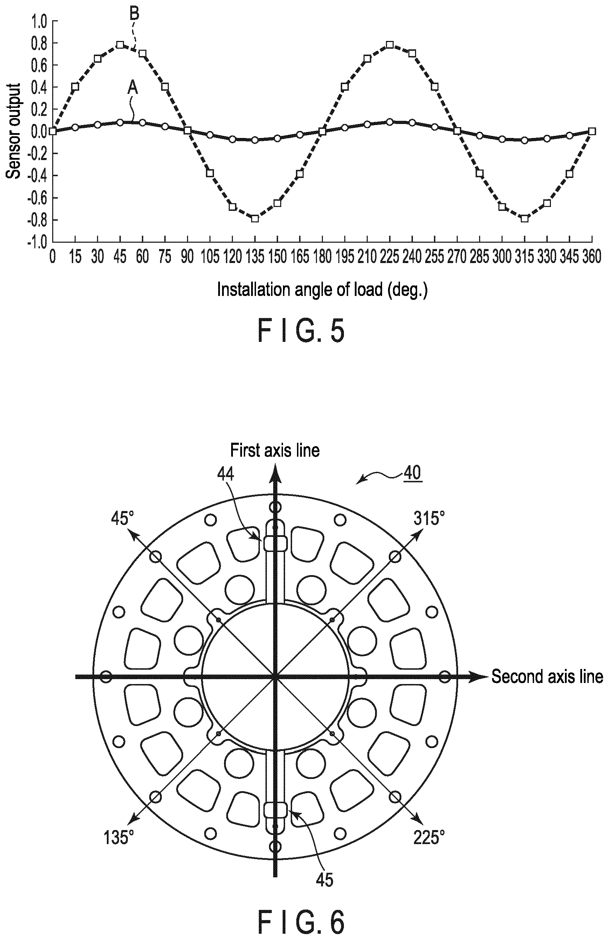

FIG. 5 is a view showing a relationship between a rotational angle (installation angle of the load) of the robot arm 30 relative to the base 31 and output signal of the torque sensor 40, and A shows the case of this embodiment and B shows the case of a comparative example without supporting device 10.

As in the case of this embodiment where the torque sensor 40 is arranged inside, for example, the first joint J1 of the robot arm 30, the robot arm 30 is made 360°-rotatable around the torque sensor 40.

As shown in FIG. 6, when the load acting as the force application point (or working point) of the robot arm 30 moves in the first axis line passing through the first strain sensor 44 and second strain sensor 45 of the torque sensor 40 or when the load moves in the second axis line perpendicular to the first axis line, although bending moment occurs, as far as positions on the axis lines are concerned, the other-axes interferences become theoretically zero. However, when the load moves to a position other than the positions on the first axis line and second axis line, bending moment accompanying the transfer weight of the robot arm 30, distance to the load, and acting acceleration is caused to the torque sensor 40. Accordingly, when there is no supporting device 10 according to this embodiment, the torque sensor 40 will be subjected to the other-axes interferences, and a sensor output of a high level occurs.

That is, as shown in FIG. 5 by B, when the load moves to a position deviated from the first axis line and second axis line, other-axes interferences are caused to the torque sensor 40, and a sensor output of a large peak occurs at each of 45°, 135°, 225°, and 315° of the rotational angle of the robot arm 30 with the first axis line set as the criterion.

Conversely, as in the case of this embodiment where the supporting device 10 is provided, the supporting device 10 can suppress the displacement of the torque sensor 40 caused by the bending moment other than the torque applied to the torque sensor 40. Thereby, it is possible to suppress the other-axes interferences in the torque sensor 40, and hence it is possible to prevent a sensor output from being generated from the torque sensor 40 at each of 45°, 135°, 225°, and 315° with the first axis line set as the criterion as shown by A of FIG. 5. Accordingly, the accuracy of torque detection performed by the torque sensor 40 can be improved.

Further, the supporting device 10 is configured independent of the torque sensor 40. For this reason, the manufacture of the supporting device 10 is facilitated.

Moreover, in general, the joint section of the robot arm has a short axial length, and hence it is desirable that each of the torque sensor and supporting device 10 to be incorporated into the joint section be a small-sized one having the shortest possible axial length. The torque sensor 40 of this embodiment is disk-shaped, and hence the total thickness obtained by adding up the thickness of the torque sensor 40 in the direction of the axis passing through the center thereof and thickness of the supporting device 10 can be reduced.

It should be noted that in the embodiment described above, the supporting device 10 is provided to the base 31 of the first joint J1. Although the removal effectiveness of the other-axes interferences obtained by providing the supporting device 10 to the first joint J1 is great, the joint to which the supporting device 10 is to be provided is not limited to the first joint J1, and the supporting device 10 can also be applied to one of the second to fourth joints J2 to J4. Also in the case where the supporting device 10 is applied to one of the second to fourth joints J2 to J4, it is possible to obtain the Advantages identical to the case where the supporting device 10 is provided to the first joint J1.

Further, the torque sensor 40 has been described with respect to the case where the torque sensor 40 is provided with the two sensor portions including the first strain sensor 44 and second strain sensor 45. However the torque sensor 40 is not limited to the case described above, and it is sufficient if the torque sensor 40 has a configuration making it possible to obtain three axis information items about Mx, My, and Mz necessary to suppress other-axes interferences. Accordingly, it is possible to apply this embodiment to a torque sensor capable of obtaining information items about three axes or less.

### (Second Embodiment)

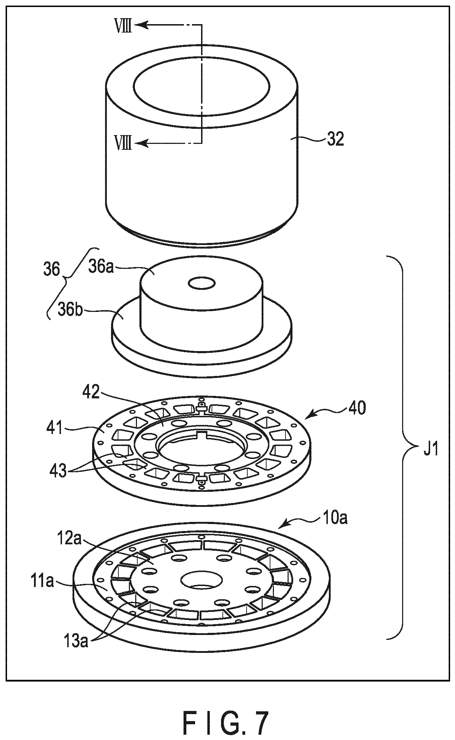

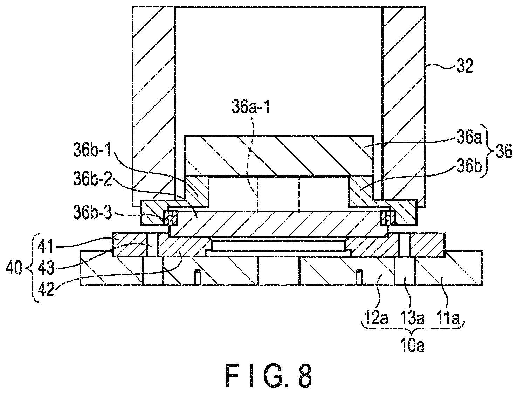

FIG. 7 and FIG. 8 show a second embodiment. The second embodiment is an embodiment contrived by modifying the supporting device 10.

In FIG. 7 and FIG. 8, a supporting device 10a is made disk-shaped in the same manner as the torque sensor 40, and is provided with an annular first supporting body 11a, annular second supporting body 12a, and plurality of third supporting bodies 13a provided between the first supporting body 11a and second supporting body 12a.

The first supporting body 11a and second supporting body 12a are arranged concentric with each other and plurality of third supporting bodies 13a is arranged at equal intervals in the circumferential direction of the first supporting body 11a and second supporting body 12a.

Each of the third supporting bodies 13a is arranged in parallel with the diametric direction, and one end thereof in the diametric direction is joined to the first supporting body 11a and the other end thereof is joined to the second supporting body 12a.

The dimension (thickness) of each of the third supporting bodies 13a in the z-axis direction (direction perpendicular to the diameter) is made greater than the dimension (width) thereof in the circumferential direction.

The third supporting bodies 13a are arranged at equal intervals in the circumferential direction of the first supporting body 11a and second supporting body 12a.

The number of the third supporting bodies 13a is greater than or equal to, for example, four.

The supporting device 10 may also be constituted of a material higher than the torque sensor 40 in Young's modulus (modulus of longitudinal elasticity), e.g., ceramic or the like. Alternatively, the supporting device 10 may also be constituted of an anisotropic material.

The width of each of the plurality of third supporting bodies 13a is less than the thickness of each of the first supporting bodies 11a, second supporting bodies 12a, and third supporting bodies 13a, and the third supporting bodies 13a are deformable in the torque (Mz) direction and have stiffness with respect to the bending moment other than the torque (Mx, My).

The first supporting body 11a is fixed to both the first structure 41 of the torque sensor 40 and, for example, base 31 (not shown) of the robot arm 30, and second supporting body 12a is fixed to both the second structure 42 of the torque sensor 40 and output shaft 36b-2 of the speed reducer 36b.

When torque (Mz) is applied to the torque sensor 40, in the supporting device 10a, the third supporting bodies 13a are deformed concomitantly with the deformation of the torque sensor 40. Accordingly, the torque sensor 40 can detect the torque.

Further, when the bending moment other than the torque (Mx, My) is applied to the torque sensor 40, in the supporting device 10a, deformation of the second supporting body 12a relative to the first supporting body 11a is suppressed by the third supporting bodies 13a, and deformation of the second structure 42 relative to the first structure 41 of the torque sensor 40 is also suppressed. Accordingly, in the torque sensor 40, output of a detection signal for the bending moment other than the torque (Mx, My) is suppressed.

### (Advantages of Second Embodiment)

By also the second embodiment described above, the Advantages identical to the first embodiment can be obtained. Furthermore, in the case of the second embodiment, the shape of the supporting device 10a is approximately identical to the shape of the torque sensor 40, and hence the second embodiment has the advantage that downsizing of the shape of the supporting device 10a is enabled and, at the same time, manufacture thereof is facilitated.

The present invention is not limited to the embodiments described above but the constituent elements of the invention can be modified in various manners without departing from the spirit and scope of the invention. Various aspects of the invention can also be extracted from any appropriate combination of a plurality of constituent elements disclosed in the embodiments. Some constituent elements may be deleted in all of the constituent elements disclosed in the embodiments. The constituent elements described in different embodiments may be combined arbitrarily.

## Claims

1. A torque sensor supporting device comprising:
a first supporting body provided to a first mounting section;
a second supporting body to be coupled to a second structure of a torque sensor including a first structure provided to the first mounting section, the second structure to be coupled to a second mounting section, third structures provided between the first structure and the second structure, and at least two sensor portions provided between the first structure and the second structure; and
third supporting bodies which are provided between the first supporting body and the second supporting body, are deformable in a torque direction of the torque sensor, and deformation of which in a direction other than a torque is suppressed.

2. The torque sensor supporting device of claim 1, **characterized in that**
the first supporting body and the second supporting body are annular, the first supporting body and the second supporting body are arranged in parallel with each other, one ends of the third supporting bodies are joined to the first supporting body, the other ends of the third supporting bodies are joined to the second supporting body, and a dimension of each of the third supporting bodies in a direction perpendicular to a diameter of each of the first supporting body and the second supporting body is greater than a dimension thereof in a circumferential direction of each of the first supporting body and the second supporting body.

3. The torque sensor supporting device of claim 1, **characterized in that**
the first supporting body and the second supporting body are annular, the first supporting body and the second supporting body are arranged concentric with each other, one ends of the third supporting bodies are joined to the first supporting body, the other ends of the third supporting bodies are joined to the second supporting body, and a dimension of each of the third supporting bodies in a direction perpendicular to a diameter of each of the first supporting body and the second supporting body is greater than a dimension thereof in a circumferential direction of each of the first supporting body and the second supporting body.

4. The torque sensor supporting device of claim 2, **characterized in that**
the second supporting body and the third supporting bodies are arranged inside the first mounting section.

5. The torque sensor supporting device of claim 2, **characterized in that**
a dimension of each of the third supporting bodies between the first supporting body and the second supporting body is greater than a dimension thereof in a diametrical direction of each of the first supporting body and the second supporting body.

6. The torque sensor supporting device of claim 2 or 3, **characterized in that**
the third supporting bodies are arranged at equal intervals in the circumferential direction of each of the first supporting body and the second supporting body.

7. The torque sensor supporting device of claim 2 or 3, **characterized in that**
the number of the third supporting bodies is greater than or equal to four.

8. The torque sensor supporting device of claim 2 or 3, **characterized in that**
a material for the third supporting bodies is a material higher than a material for the torque sensor in Young's modulus (modulus of longitudinal elasticity).

9. The torque sensor supporting device of claim 8, **characterized in that**
the material for the third supporting bodies is ceramic or an anisotropic material.
